# NEUE EUROPÄISCHE PATENTSCHRIFT

(11) **EP 3 560 149 B2**
(45) Veröffentlichungstag und Bekanntmachung des Hinweises auf die Entscheidung über den Einspruch: **09.08.2023**
(45) Hinweis auf die Patenterteilung: 13.01.2021
(21) Anmeldenummer: 17764366.5
(22) Anmeldetag: 04.09.2017
(51) Int. Cl.: H04L 12/40

(54) **VERPACKUNGSMASCHINE MIT BUSKNOTENANORDNUNG**
PACKAGING MACHINE WITH A BUS NODE ASSEMBLY
MACHINE D'EMBALLAGE AVEC UN DISPOSITIF DE NOEUD DE BUS

(30) Priorität: 21.12.2016 DE 102016125132
(43) Veröffentlichungstag der Anmeldung: 30.10.2019
(73) Patentinhaber: MULTIVAC Sepp Haggenmüller SE & Co. KG, 87787 Wolfertschwenden (DE)
(72) Erfinder: EHRMANN, Elmar, 87730 Bad Grönenbach (DE); LAU, Christian, 88178 Heimenkirch (DE); PFALZER, Thomas, 87783 Lautrach (DE); FELCH, Florian,, 87471 Durach (DE); BOTZENHARDT, Claus, 87439 Kempten (DE); KURZ, Andreas, 87700 Memmingen (DE); RÄDLER, Michael, 87439 Kempten (DE); REMMELE, Thorsten, 87784 Westernheim (DE)
(74) Vertreter: Grünecker Patent- und Rechtsanwälte PartG mbB
(86) Internationale Anmeldenummer: PCT/EP2017/072073
(87) Internationale Veröffentlichungsnummer: WO 2018/114064

(56) Entgegenhaltungen:
- EP-A1- 1 440 886
- EP-A1- 1 440 886
- EP-A1- 2 522 581
- EP-A1- 2 522 581
- EP-A1- 2 860 119
- EP-A1- 2 860 119
- EP-A1- 2 889 229
- EP-A1- 3 088 314
- EP-A2- 1 460 502
- EP-A2- 1 460 502
- WO-A1-2015/200911
- DE-A1- 10 012 579
- DE-A1-102008 024 461
- DE-U1-202007 007 411

## Beschreibung

Die Erfindung bezieht sich auf eine Verpackungsmaschine gemäß dem Oberbegriff des Anspruchs 1.

Eine Verpackungsmaschine ist aus der DE 10 2008 024 461 A1 bekannt. Diese Verpackungsmaschine verfügt über verschiedene Bearbeitungsstationen, wie beispielsweise Form-, Siegel- und Schneidstationen, die gemeinsam von einer Zentralsteuereinheit gesteuert werden. Jede einzelne Bearbeitungsstation verfügt über eine individuelle Bearbeitungsstationssteuereinheit, die für die Steuerung eines in der jeweiligen Station vorhandenen Werkzeugs sorgt.

Eine gattungsgemäße Verpackungsmaschine ist in der EP 1 440 886 A1 beschrieben.

Eine andere Verpackungsmaschine, die mit einem um die gesamte Verpackungsmaschine herumlaufenden Lichtband versehen ist, geht aus der EP 3 088 314 A1 hervor.

Schließlich offenbart die DE 100 12 579 B4 eine Bearbeitungsstation mit einem Bussystem, allerdings ohne jeden Bezug zu Verpackungsmaschinen sondern zum Einsatz für eine geschlossene Transportbahn für Paletten.

Die Aufgabe der Erfindung ist es, eine Verpackungsmaschine hinsichtlich der Effizienz ihres Betriebs und ihrer Handhabung weiter zu verbessern.

Diese Aufgabe wird gelöst durch eine Verpackungsmaschine mit den Merkmalen des Anspruchs 1. Vorteilhafte Weiterbildungen der Erfindung sind in den Unteransprüchen angegeben.

Die Erfindung bezieht sich auf eine Verpackungsmaschine mit einer Arbeitsstation, die in ihrem Inneren ein Werkzeug mit wenigstens einem Heizelement und/oder einem anderen Aktor aufweist. Bei der Arbeitsstation kann es sich damit um eine Formstation handeln, in deren Innerem als Werkzeug ein Formwerkzeug zum Tiefziehen von Mulden in eine Verpackungsfolie vorgesehen ist. Alternativ könnte es sich bei der Arbeitsstation um eine Siegelstation handeln, die als Werkzeug ein Siegelwerkzeug aufweist, beispielsweise eine beheizte Siegelplatte. Denkbar wäre es auch, dass es sich bei der Arbeitsstation um eine Schneidstation mit einem beheizten Messer als Werkzeug handelt. Das Heizelement kann ein elektrisches Heizelement wie beispielsweise ein Rohrheizkörper oder ein Widerstandsheizelement oder auch ein induktives Heizelement sein. Ein Aktor ist allgemein ein Element, welches als Teil des Werkzeugs auf Verpackungsmaterial einwirkt, z. B. durch Ausüben von Wärme (dazu kann der Aktor beispielsweise ein Ultraschallerzeuger sein) oder durch Ausüben mechanischer Kräfte (dazu kann bei einer Formstation als Arbeitsstation der Aktor beispielsweise ein bewegter Formstempel sein).

Auf der Außenseite der Arbeitsstation ist erfindungsgemäß eine Busknotenanordnung aufgesetzt. Diese Busknotenanordnung umfasst eine Gehäusekappe, die zum Schutz vor Verschmutzung, Feuchtigkeit und/oder thermischen Einflüssen dient. Die Gehäusekappe überdeckt wenigstens eine mit Elektronikbauteilen bestückte Platine, die ihrerseits mit einer Schnittstelle zum Verbinden mit einem elektronischen Kommunikationsbus verbunden ist. Die Busknotenanordnung ist ferner dazu konfiguriert, über die Schnittstelle eine Information über das Werkzeug der Arbeitsstation bereitzustellen und/oder von außen Steuerungsdaten für das Werkzeug zu empfangen. Bei den Informationen kann es sich beispielsweise um Daten zur konkreten Ausführung des Werkzeugs handeln, während es sich bei den Steuerungsdaten um Arbeitsbefehle oder Sollwerte für den Betrieb des Werkzeugs handeln kann. Bei beiden Arten von Daten kann es sich beispielsweise um eine Abzugslänge der Folienbahn, die Größe einer Siegelfläche, eine Siegeltemperatur, eine Formatbezeichnung des Werkzeugs, ein Werkzeughub oder maximale oder minimale Werte für die vorgenannten Parameter handeln.

Als Bus oder Kommunikationsbus wird hier in üblicher Weise ein System zur Datenübertragung zwischen mehreren Teilnehmern über einen gemeinsamen Übertragungsweg verstanden. Bei einem Busknoten handelt es sich um eine an den Bus angeschlossene Komponente, allgemein auch als Busteilnehmer bezeichnet. Eine Busknotenanordnung umfasst einen solchen Busknoten.

Ein technischer Vorteil der Erfindung liegt darin, dass in die Busknotenanordnung als mechatronische Komponente Elektronik ausgelagert wird, die sich bei herkömmlichen Maschinen in einem zentralen Schaltschrank befunden hatte. Dies führt dazu, dass der Platzbedarf für den zentralen Schaltschrank und damit u. U. auch für die gesamte Verpackungsmaschine kleiner wird. Ein weiterer Vorteil liegt darin, dass die Busknotenanordnung bedingt durch ihre Anordnung auf der Außenseite der Wand der Arbeitsstation leicht zugänglich ist, insbesondere um die Busknotenanordnung zu warten oder neu konfigurieren zu können. Zudem kann Verkabelung eingespart werden, was wiederum einen möglichst hygienischen Betrieb der Maschine begünstigt.

Als besonders vorteilhafte Variante sieht die Busknotenanordung einen Träger für die Platine vor. Bei diesem Träger kann es sich um eine stabile Struktur handeln, die die u. U. empfindliche Platine vor mechanischer Beanspruchung schützt. Vorzugsweise ist der Träger dermaßen formstabil, dass er Druckunterschieden bis zu 6 bar zwischen den der Platine zugewandten und der Platine abgewandten Seiten des Trägers standhält.

Bevorzugt trennt der Träger eine der Platine zugewandte Seite hermetisch von einer gegenüberliegenden, d. h. der Platine abgewandten Seite. Dies ermöglicht es, die von der Platine abgewandte Seite des Trägers den im Innenraum der Arbeitsstation herrschenden, u. U. wechselnden Druckverhältnissen auszusetzen, ohne dass die Platine diesen Druckunterschieden ausgesetzt wäre.

In einer zweckmäßigen Ausführung weist der Träger Aluminium als Material auf.

Zweckmäßig kann es sein, wenn die Busknotenanordnung derart über einer Aussparung in der Wand der Arbeitsstation angeordnet ist, dass die Gehäusekappe und/oder der Träger die Aussparung vollständig überdeckt. Diese Aussparung kann den Zugang zum Innenraum der Arbeitsstation ermöglichen, beispielsweise zu Messzwecken oder um einen Werkzeugwechsel zu vereinfachen. Gleichzeitig schützt die Gehäusekappe nicht nur die in ihr enthaltenen Teile der Busknotenanordnung sondern auch die Aussparung und damit den Innenraum der Arbeitsstation.

Vorzugsweise ist zwischen dem Träger und der Platine eine Abdichtung vorgesehen, bei der es sich z. B. um eine Silikonmatte handeln kann. Diese Abdichtung verhindert das Hindurchtreten von Staub, Feuchtigkeit oder Nässe zwischen dem Träger und der Platine. Wenn die Abdichtung ein flexibles Material aufweist, sorgt sie außerdem für eine Stoßdämpfung zwischen dem Träger und der Platine.

Als vorteilhaft stellt es sich heraus, wenn die Gehäusekappe lösbar an der Wand der Arbeitsstation befestigbar ist, z. B. mittels Gewindebolzen. Das Abnehmen der Gehäusekappe kann dann eine Kontrolle oder Neukonfiguration der wenigstens einen Platine der Busknotenanordnung erlauben.

Erfindungsgemäß ist eine Ringdichtung vorgesehen, die die Gehäusekappe ringförmig umlaufend gegen die Außenseite der Wand abdichtet, vorzugsweise wasserdicht, staubdicht und/oder spritzwasserdicht. Auf diese Weise sind die Busknotenanordnung, insbesondere die Platine und ihre Elektronikbauteile, besonders effektiv geschützt gegenüber negativen Einflüssen im Betrieb und/oder bei der Reinigung der Verpackungsmaschine.

In einer Variante der Erfindung ist die Ringdichtung insgesamt oder zumindest abschnittsweise transparent oder transluzent. Zu diesem Zweck kann die Ringdichtung beispielsweise aus Silikon gebildet sein.

Denkbar ist es ferner, dass die Busknotenanordnung eine Lichtquelle aufweist, die beispielsweise in Form von einer oder mehreren Leuchtdioden vorgesehen sein kann. Der Betrieb der wenigstens einen Lichtquelle kann über die Platine der Busknotenanordnung erfolgen.

Die wenigstens eine Lichtquelle ist zweckmäßig innerhalb der Gehäusekappe oder an einer der Ringdichtung zugewandten Kante der Gehäusekappe angeordnet. Dies bedeutet, dass die Lichtquelle durch die Gehäusekappe und/oder durch die Ringdichtung geschützt ist vor negativen Einflüssen durch Staub, Wasser oder Feuchtigkeit, und dass sie die Gehäusekappe und/oder die Ringdichtung quasi von innen beleuchtet.

In einem bestimmten erfindungsgemäßen Konzept zum Betrieb der Verpackungsmaschine ist die Lichtquelle ansteuerbar zum Erzeugen unterschiedlicher Farben und/oder unterschiedlicher zeitlicher oder räumlicher Leuchtmuster. Dies ermöglicht es, dass die Busknotenanordnung einem Bediener der Verpackungsmaschine eine optische Statusmeldung gibt betreffend den Betrieb derjenigen Arbeitsstation, an der die jeweilige Busknotenanordnung angebracht ist. Beispielsweise könnte die Lichtquelle in den Farben Blau, Grün, Gelb/Orange oder Rot leuchten, wobei grünes oder blaues Licht einen ordnungsgemäßen Betrieb der Arbeitsstation, gelbes/oranges Licht eine Warnung und rotes Licht eine Fehlermeldung bzw. einen Stillstand der Arbeitsstation signalisiert. Als zeitliches Leuchtmuster mit besonderer Warnwirkung wäre ein Blinken der Lichtquelle denkbar, als räumliches Leuchtmuster ein Hin- und Herlaufen oder ein Umlaufen eines Lichtsignals um die Ringdichtung der Busknotenanordnung herum. Zusätzlich oder alternativ zu einer optischen Informationsvermittlung über die wenigstens eine Lichtquelle wäre auch eine akustische Informationsübermittlung an den Bediener denkbar, beispielsweise über einen Tongenerator.

Die über die Schnittstelle bereitgestellte Information über das Werkzeug könnte insbesondere eine Kennung des jeweiligen Werkzeugs umfassen, mit der das Werkzeug eindeutig identifizierbar ist. Dies ist vorteilhaft, um beispielweise den Betrieb der Arbeitsstation und damit der gesamten Verpackungsmaschine mit unpassenden Werkzeugen zu verhindern. Nach dem Wechseln eines passenden Werkzeugs kann außerdem der Betrieb der Arbeitsstation und/oder der gesamten Verpackungsmaschine anhand der Kennung auf das jeweilige Werkzeug und seine Eigenschaften abgestimmt werden.

Bevorzugt ist die Schnittstelle als bidirektionale Schnittstelle ausgebildet, so dass über sie nicht nur Daten oder Informationen von dem Werkzeug nach außen an den Bus ausgegeben werden, sondern auch Steuerungsdaten über die Schnittstelle empfangen und an das Werkzeug weitergeleitet werden können.

Günstig ist es auch, wenn die Kommunikation über die Schnittstelle verschlüsselt ist, was die Prozesssicherheit der Verpackungsmaschine verbessert.

An der Platine der Busknotenanordnung können ferner ein oder mehrere insbesondere elektrische oder elektronische Steuerelemente zur Ansteuerung des wenigstens einen Heizelements des Werkzeugs vorgesehen sein, so dass insbesondere für diese Steuerelemente weniger oder gar kein Platz mehr in einem zentralen Schaltschrank der Verpackungsmaschine bereitgehalten werden muss. Bei den Steuerelementen kann es sich um Schütze oder um Solid-State-Relais handeln.

In einer zweckmäßigen Variante der Erfindung sind in der Arbeitsstation ein oder mehrere Sensoren vorgesehen, die beispielsweise eine Temperatur des Werkzeugs oder der Heizelemente, einen Druck von Aktorik der Arbeitstation oder den Gasdruck in einer Arbeitskammer der Arbeitsstation messen. Bestimmte Elektronikbauteile an der Platine können dann konfiguriert sein zum Empfangen und/oder zum Auswerten von Signalen des einen Sensors oder der mehreren Sensoren.

Schließlich ist die Busknotenanordnung vorzugsweise für den Anschluss an ein Hybridkabel ausgebildet, über das sowohl eine Leistungsversorgung als auch der Kommunikationsbus mit der Busknotenanordnung gekoppelt werden.

Im Folgenden wird die Erfindung anhand von Ausführungsbeispielen näher erläuert. Im Einzelnen zeigen:
- Fig. 1: eine schematische Seitenansicht einer erfindungsgemäßen Verpackungsmaschine,
- Fig. 2: eine schematische Darstellung einer Arbeitsstation der Verpackungsmaschine,
- Fig. 3: eine perspektivische Ansicht eines ersten Ausführungsbeispiels einer Busknotenanordnung,
- Fig. 4: eine perspektivische Ansicht eines zweiten Ausführungsbeispiels einer Busknotenanordnung,
- Fig. 5: eine weitere perspektivische Ansicht einer Busknotenanordnung und
- Fig. 6: eine Explosionsdarstellung einer Busknotenanordnung.

Gleiche Komponenten sind in den Figuren durchgängig mit gleichen Bezugszeichen versehen.

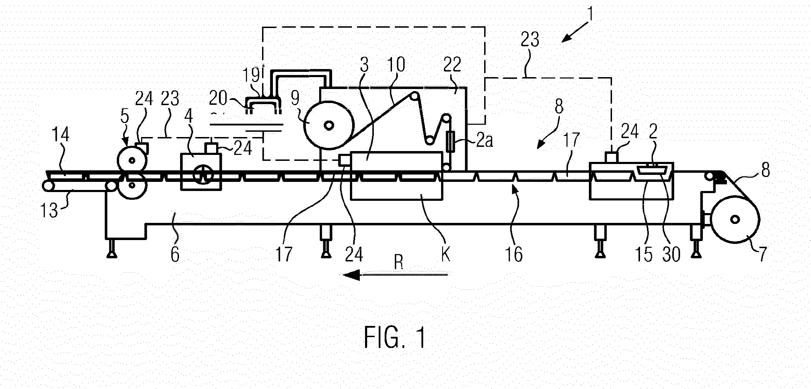

Figur 1 zeigt in einer schematischen Seitenansicht eine erfindungsgemäße, intermittierend arbeitende Tiefziehverpackungsmaschine 1. Diese Tiefziehverpackungsmaschine 1 weist eine Formstation 2, eine Siegelstation 3, eine Querschneideeinrichtung 4 und eine Längsschneideeinrichtung 5 auf, die in dieser Reihenfolge in einer Transportrichtung R an einem Maschinengestell 6 angeordnet sind. Eingangsseitig befindet sich an dem Maschinengestell 6 eine Zufuhrrolle 7, von der eine Unterfolie 8 abgezogen wird. Im Bereich der Siegelstation 3 ist ein Materialspeicher 9 vorgesehen, von dem eine Oberfolie 10 abgezogen wird. Ausgangsseitig ist an der Tiefziehverpackungsmaschine 1 eine Abfuhreinrichtung 13 in Form eines Transportbandes vorgesehen, mit der fertige, vereinzelte Verpackungen 14 abtransportiert werden. Ferner weist die Tiefziehverpackungsmaschine 1 eine nicht näher dargestellte Vorschubeinrichtung auf, die die Unterfolie 8 ergreift und diese pro Hauptarbeitstakt in der Transportrichtung R weitertransportiert. Die Vorschubeinrichtung kann zum Beispiel durch beidseitig angeordnete Transportketten bzw. Klammerketten ausgeführt sein.

In der dargestellten Ausführungsform ist die Formstation 2 als eine Tiefziehstation ausgebildet, bei der in die Unterfolie 8 durch Tiefziehen, beispielsweise mittels Druckluft und/oder Vakuum, Mulden 15 geformt werden. Dabei kann die Formstation 2 derart ausgebildet sein, dass in der Richtung senkrecht zur Transportrichtung R mehrere Mulden 15 nebeneinander gebildet werden. In Transportrichtung R hinter der Formstation 2 ist eine Einlegestrecke 16 vorgesehen, in der die in der Unterfolie 8 geformten Mulden 15 mit Produkt 17 befüllt werden.

Die Siegelstation 3 verfügt über eine hermetisch verschließbare Kammer K, in der die Atmosphäre in den Mulden 15 vor dem Versiegeln mit der Oberfolie 10 zum Beispiel evakuiert und/oder durch Gasspülen mit einem Austauschgas oder mit einem Gasgemisch ersetzt werden kann.

Die Querschneideeinrichtung 4 ist als Stanze ausgebildet, die die Unterfolie 8 und die Oberfolie 10 in einer Richtung quer zur Transportrichtung R zwischen benachbarten Mulden 15 durchtrennt. Dabei arbeitet die Querschneideeinrichtung 4 derart, dass die Unterfolie 8 nicht über die gesamte Breite aufgetrennt wird, sondern zumindest in einem Randbereich nicht durchtrennt wird. Dies ermöglicht einen kontrollierten Weitertransport durch die Vorschubeinrichtung.

Die Längsschneideeinrichtung 5 ist in der dargestellten Ausführungsform als eine Messeranordnung ausgebildet, mit der die Unterfolie 8 und die Oberfolie 10 zwischen benachbarten Mulden 15 und am seitlichen Rand der Unterfolie 8 in der Längsrichtung R durchtrennt werden, so dass hinter der Längsschneideeinrichtung 5 vereinzelte Verpackungen 14 vorliegen.

Die Tiefziehverpackungsmaschine 1 verfügt ferner über eine Steuerung 19. Sie hat die Aufgabe, die in der Tiefziehverpackungsmaschine 1 ablaufenden Prozesse zu steuern und zu überwachen. Eine Anzeigevorrichtung 20 mit Bedienelementen 21 dient zum Visualisieren bzw. Beeinflussen der Prozessabläufe in der Tiefziehverpackungsmaschine 1 für bzw. durch einen Bediener.

In einem Schaltschrank 22 sind zentrale Elektrikbauteile der Tiefziehmaschine 1 angeordnet, beispielsweise die Verbindung zu einer externen Stromquelle. Über einen Kommunikationsbus 23, im Folgenden kurz Bus genannt, steht die Steuerung 19 in Datenaustausch mit den Arbeitsstationen 2, 3, 4, 5 der Tiefziehverpackungsmaschine 1 und mit dem Schaltschrank 22. An zumindest einer einzigen, vorzugsweise jedoch an mehreren Arbeitsstationen 2, 3, 4, 5 ist zur Anbindung an den Kommunikationsbus 23 jeweils eine Busknotenanordnung 24 vorgesehen.

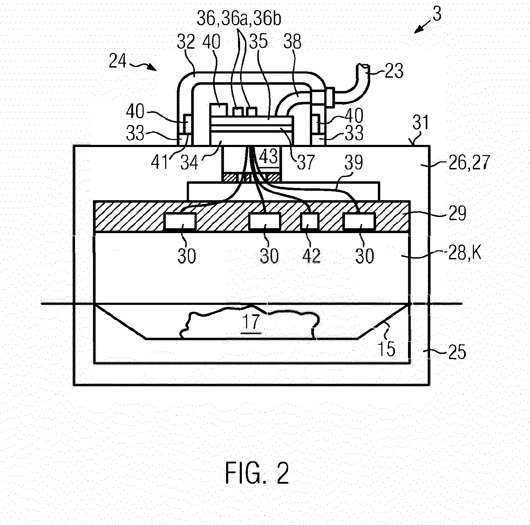

Fig. 2 zeigt schematisch einen Vertikalschnitt durch die Siegelstation 3 als Beispiel für eine Arbeitsstation. Die Siegelstation 3 verfügt über ein Unterteil 25, in dem eine oder mehrere Verpackungsmulden 15 aufnehmbar sind, sowie über ein glockenförmiges Oberteil 26 mit einer Wand 27, die einen Innenraum 28 umgibt. Unter- und Oberteil 25, 26 können geschlossen werden, um gemeinsam die hermetisch abgeschlossene Siegelkammer K zu bilden.

Im Innenraum 28 der Siegelstation 3 ist ein Werkzeug 29 angeordnet, bei dem es sich hier um eine Siegelplatte handelt. Bei einer Formstation 2 als Arbeitsstation kann es sich beim Werkzeug 29 um eine Heizplatte oder um ein beheiztes Formwerkzeug handeln. Das Werkzeug 29 verfügt über wenigstens ein Heizelement 30, mit dem es vorzugsweise elektrisch beheizbar ist. In Fig. 2 sind drei solcher Heizelemente 30 dargestellt, die in das Werkzeug 29 eingebettet sind. Alternativ oder zusätzlich weist das Werkzeug 29 wenigstens einen Aktor 30 auf - im Falle einer Formstation 2 beispielsweise einen beweglichen Formstempel 30, siehe Fig. 1.

Auf die vom Innenraum 28 abgewandte Außenseite 31 der Wand 27 ist erfindungsgemäß eine Busknotenanordnung 24 aufgesetzt. Diese Busknotenanordnung 24 weist eine Gehäusekappe 32 auf, die aus Kunststoffmaterial geformt sein kann, und zwar entweder aus lichtdurchlässigem oder aus lichtundurchlässigem Kunststoff. Eine Ringdichtung 33 aus flexiblem Material dichtet die Gehäusekappe 32 zumindest staub- und/oder spritzwasserdicht gegen die Außenseite 31 der Wand 27 ab. Die Ringdichtung 33 ist vorzugsweise aus transparentem oder transluzentem Material; sie kann beispielsweise Silikon aufweisen oder aus Silikon bestehen.

Im Inneren der Gehäusekappe 32 befindet sich ein massiver und stabiler Träger 34, beispielsweise aus Aluminium. Der Träger 34 unterstützt eine von ihm getragene Platine 35, die mit Elektronikbauteilen 36 bestückt ist. Zwischen der Platine 35 und dem Träger 34 ist eine Abdichtung 37, beispielsweise in Form einer Silikonmatte 37, angeordnet.

Die Busknotenanordnung 24 weist ferner eine mit der Platine 35 verbundene Schnittstelle 38 auf, mittels derer die Platine 35 mit dem Kommunikationsbus 23 verbunden ist. Elektrische Leitungen 39 verbinden die Platine 35 mit den jeweiligen Heizelementen 30 und/oder Aktoren 30. Über diese elektrischen Leitungen 39 wird Strom für den Betrieb der Heizelemente 30 und/oder Aktoren 30 bereitgestellt.

Die Busknotenanordnung 24 verfügt ferner über wenigstens eine Lichtquelle 40, z. B. in Form einer oder mehrerer LEDs. Im vorliegenden Ausführungsbeispiel ist die Lichtquelle 40 auf der Platine 35 angeordnet und wird von ihr betrieben. Der Betrieb der Lichtquelle 40 kann so erfolgen, dass die Lichtquelle 40 angesteuert wird zum Erzeugen unterschiedlicher Farben (beispielsweise Blau, Grün, Gelb/Orange oder Rot), unterschiedlicher Beleuchtungsstärken und/oder unterschiedlicher zeitlicher Leuchtmuster (beispielsweise blinkend). Wenn mehr als eine Lichtquelle 40 vorgesehen sind, können diese auch angesteuert werden zum Erzeugen verschiedener räumlicher Leuchtmuster, beispielsweise sich bewegender Leuchtmuster. Beispielsweise können zu diesem Zweck eine oder mehrere der Lichtquellen zusätzlich oder alternativ an einer der Ringdichtung 33 zugewandten Kante 41 der Gehäusekappe 32 angeordnet sein. Im dargestellten Ausführungsbeispiel sitzen diese Lichtquellen 40 in einer Vertiefung in der der Ringdichtung 33 zugewandten Kante 41 der Gehäusekappe 32. Alternativ sind die Lichtquellen 40 Teil der Platine 35, die sich bis an die Gehäusekappe 32 erstrecken kann.

Zusätzlich zu den Elektronikbauteilen 36 können an der Platine 35 auch ein oder mehrere Steuerelemente 36a zur Ansteuerung des wenigstens einen Heizelements oder Aktors 30 vorgesehen sein. Unter Steuerelementen 36a für die Heizelemente 30 werden beispielsweise Schütze oder Solid-State-Relais verstanden. Bestimmte Elektronikbauteile 36b an der Platine 35 können konfiguriert sein zum Empfangen und/oder Auswerten von Signalen von einem oder mehreren in der Arbeitsstation 3 vorgesehenen Sensoren 42. Dabei kann es sich beispielsweise um Temperatursensoren 42 zum Messen der Temperatur des Werkzeugs 29, um Drucksensoren 42 zum Messen eines Drucks im Innenraum 28 bzw. in der Siegelkammer K oder um einen Gassensor 42 zum Messen eines Gehalts an Sauerstoff oder eines anderen Gases handeln. Bei einer Siegelstation könnte ein Positionssensor 42 zum Erfassen einer Position der Siegelplatte vorgesehen sein.

Fig. 2 zeigt ferner, dass sich in der Wand 27 der Siegelstation 3 eine Aussparung 43 befindet, die sich im vorliegenden Ausführungsbeispiel sogar fortsetzt bis zum Innenraum 28. Die Aussparung 43 ist vollständig von der Gehäusekappe 32 der Busknotenanordnung 24 überdeckt. Im vorliegenden Ausführungsbeispiel ist sogar der Träger 34 so groß, dass er selbst bereits die Aussparung 34 vollständig überdeckt.

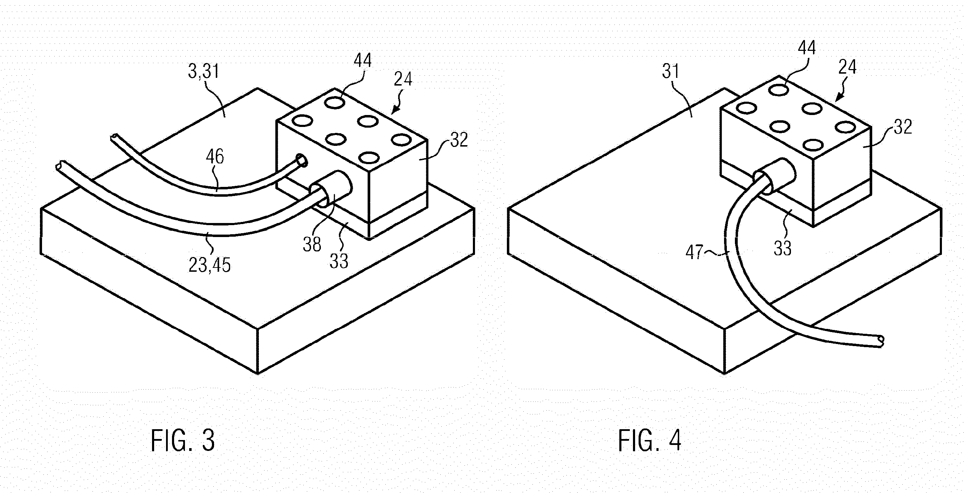

Fig. 3 zeigt die auf der Außenseite 31 der Wand 27 der Arbeitsstation 3 angeordnete Busknotenanordnung 24 in perspektivischer Ansicht. Zu sehen sind die Köpfe von im vorliegenden Ausführungsbeispiel sechs Gewindebolzen 44, mit denen die Busknotenanordnung 24 bzw. ihre Gehäusekappe 32 lösbar an der Außenseite 31 der Wand 27 befestigt ist. Zu erkennen ist ferner, dass die Ringdichtung 33 zur Abdichtung der Gehäusekappe 32 gegen die Außenseite 31 der Wand 27 von außen sichtbar ist. Die Ringdichtung 33 umläuft die Gehäusekappe 32 und kann mittels der Leuchtquelle(n) 40 von innen beleuchtet werden.

Im Ausführungsbeispiel nach Fig. 3 ist ein Datenkabel 45 für den Kommunikationsbus 23 vorgesehen, das im Bereich der Schnittstelle 38 in die Busknotenanordnung 24 geführt ist. Beim Datenkabel 45 kann es sich beispielsweise um ein Ethernet- bzw. Ethercat-Kabel handeln. Zusätzlich ist ein separates Stromkabel 46 zur Strom- bzw. Leistungsversorgung der Busknotenanordnung 24 sowie über diese zur Leistungsversorgung der Heizelemente 30 des Werkzeugs 29 vorgesehen und parallel zum Datenkabel 45 in die Busknotenanordung 24 geführt.

Im Ausführungsbeispiel nach Fig. 4 hingegen ist ein Hybridkabel 47 vorgesehen, über das sowohl der Datenaustausch über den Kommunikationsbus 23 als auch die Strom- bzw. Leistungsversorgung der Busknotenanordnung 24 erfolgt.

Statt aus Kunststoff kann die Gehäusekappe 32 der Busknotenanordnung 24 auch stabiler ausgebildet sein, beispielsweise als Alu-Druckgussteil. Anstelle von Gewindebolzen 44 können auch andere Mittel zum lösbaren Befestigen der Gehäusekappe 32 an der Wand 27 der Arbeitsstation 2, 3, 4, 5 eingesetzt werden, beispielsweise Clips oder Klammern.

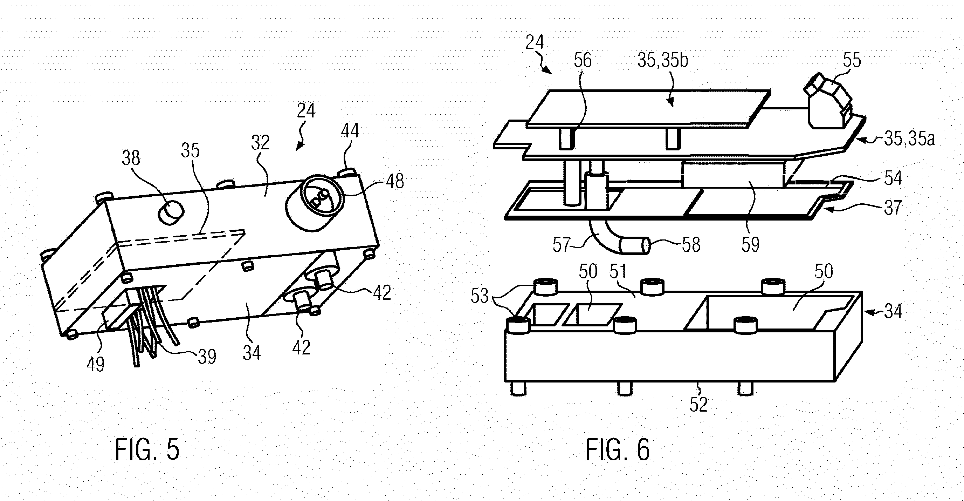

Fig. 5 zeigt eine perspektivische Ansicht der Busknotenanordnung 24. Dargestellt ist das Gehäuse 32, das mittels der Gewindebolzen 44 an der Außenseite 31 der Wand 27 der Arbeitsstation 2, 3, 4, 5 lösbar befestigt wird. In der teiltransparenten Darstellung der Gehäusekappe 32 wird die Platine 35 sichtbar, die vom Träger 34 getragen wird. An der Außenseite der Gehäusekappe 32 befindet sich ein Anschluss 38 als Schnittstelle zum Kommunikationsbus 23, sowie ein weiterer Anschluss 48 zum Anschließen des Stromkabels 46.

Die elektrischen Leitungen 39 zur Stromversorgung der Heizelemente 30 durchdringen ausgehend von der Platine 35 den Träger 34. Ferner umfasst die Busknotenanordnung 24 in diesem Ausführungsbeispiel eine beispielsweise mit dem Träger 34 mechanisch verbundene Steckerleiste 49, an die weitere Verbraucher und/oder Sensoren 42 anschließbar sind. Im vorliegenden Ausführungsbeispiel sind zwei Sensoren 42, beispielsweise Drucksensoren oder Sensoren zur Messung der Konzentration bestimmter Gase, in die Busknotenanordnung 24 integriert. Diese integrierten Sensoren 42 können zusätzlich oder alternativ zu den beispielweise im Werkzeug 29 angeordneten Sensoren 42 vorgesehen sein.

Fig. 6 zeigt ein Ausführungsbeispiel der Busknotenanordnung 24 in Explosionsdarstellung. Zu erkennen ist, dass der Träger 34, beispielsweise aus Aluminium gebildet, Öffnungen 50 aufweist, die den Träger 34 von seiner der Platine 35 zugewandten Seite 51 bis zur gegenüberliegenden, der Wand 27 zugewandten Seite 52 durchdringen. Diese Öffnungen 50 bilden Vergussnester, in die beim Zusammenbau nach dem Hindurchführen von Kabeln oder dem Einsetzen von Elektronikbauteilen 36 an der Platine 35 eine Vergussmasse wie Polyurethan eingegossen werden kann. Mittels mehrerer Gewindebolzen 53 ist der Träger 34 fest, aber lösbar mit der Außenseite 31 der Wand 27 verbindbar.

Die als Silikonmatte ausgebildete Abdichtung 37 weist ebenfalls Aussparungen 54 auf, die im Wesentlichen kongruent sind zur Form der Öffnungen 50 im Träger 34, und sogar genau die gleiche Größe haben könnten.

Im vorliegenden Ausführungsbeispiel verfügt die Busknotenanordnung 24 über zwei verschiedene Platinen 35a, 35b, nämlich über eine Leistungsplatine 35a und eine Logikplatine 35b. Auf der Leistungsplatine 35a ist eine Stecker- oder Kontaktanordnung 55 zur Anbindung an den Anschluss 48 für das Stromkabel 46 vorgesehen. Eine Mehrzahl von Stiften 56 trägt die Logikplatine 35b und hält sie in einem vorbestimmten Abstand relativ zur Leistungsplatine 35a. Elektrische Kontakte oder Kontaktstifte 57 erstrecken sich ausgehend von den Platinen 35a, 35b durch die Abdichtung 37 und den Träger 34 hindurch. Die elektrischen Kontakte 57 können beispielsweise als Kontaktstifte aus Messing ausgebildet sein und optional von einer Kunststoffhülse 58 umhüllt sein.

Das in der Arbeitsstation 2, 3, 4, 5 eingesetzte Werkzeug 29 kann über eine individuelle, eindeutige Kennung verfügen. Die Busknotenanordnung 24 ist in der Lage, drahtlos oder drahtgebunden diese Kennung des Werkzeugs 29 auszulesen und sie über den Bus 23 der Steuerung 19 der Tiefziehverpackungsmaschine 1 zur Verfügung zu stellen. Dies wiederum erlaubt der Steuerung 19 eine Überprüfung dahingehend, ob das korrekte Werkzeug 29 eingebaut ist. Bei Einbau eines falschen Werkzeugs 29 kann eine Fehlermeldung ausgegeben werden. Bei Erkennen eines korrekt eingebauten Werkzeugs 29 hingegen kann der Betrieb der Tiefziehverpackungsmaschine 1 bzw. der Arbeitsstation 2, 3, 4, 5 an das jeweilige Werkzeug 29 angepasst werden. Zum Auslesen der Kennung des Werkzeugs 29 kann beispielsweise ein (RFID-)Lesekopf 59 mit der Platine 35, 35b verbunden sein.

Über den Bus 23 kann die Busknotenanordnung 24 folglich Daten bezüglich des Werkzeugs 29 an die Maschinensteuerung 19 übermitteln. Gleichzeitig kann sie über den Bus 23 Steuerbefehle oder Konfigurationsdaten von der Steuerung 19 empfangen, beispielsweise hinsichtlich bestimmter Heiz- oder Siegelverfahren, der Folienbreite, der Abzugslänge, der Formataufteilung, der Siegelfläche oder des Siegeldrucks.

Mittels der Sensoren 42 kann der Betrieb der Arbeitsstation 2, 3, 4, 5 überwacht werden, so dass Zustandssignale über den Bus 23 an die Steuerung 19 der Verpackungsmaschine 1 übermittelt werden können, beispielsweise hinsichtlich des in der Kammer K herrschenden Drucks, der Konzentration bestimmter Gase, des verwendeten Siegeldrucks, der herrschenden Temperatur etc.

Die Busknotenanordnung 24 erlaubt es außerdem, durch ihre auf die Außenseite 31 aufgesetzte und über die Außenseite 31 hinaus vorstehende Form und die mindestens eine Lichtquelle 40, dem Bediener der Verpackungsmaschine 1 Rückmeldung zu geben über den Status und Betrieb der jeweiligen Arbeitsstation 2, 3, 4, 5. Beispielsweise kann die Lichtquelle 40 in blauer oder grüner Farbe leuchten, wenn die Arbeitsstation 2, 3, 4, 5 ordnungsgemäß arbeitet. Der Bediener sieht dies über die von innen beleuchtete Ringdichtung 33 - und zwar weitgehend unabhängig von seinem aktuellen Standort. Die Lichtquelle 40 kann gelb/orange leuchten, wenn der Betrieb der Arbeitsstation 2, 3, 4, 5 oder ihres Werkzeugs 29 problematisch zu werden droht oder eine Inspektion durch den Bediener erfordert. Eine rot leuchtende Lichtquelle 40 kann hingegen eine Blockade oder einen Stillstand der Arbeitsstation signalisieren. Die Anordnung der Busknotenanordnungen 24 an oder auf den jeweiligen Arbeitsstationen 2, 3, 4, 5 ermöglicht es dem Bediener, sehr schnell zu erkennen, an welcher Arbeitsstation das Problem aufgetreten ist. Dies minimiert die zum Beheben des Problems erforderliche Zeit, was den Betrieb der Verpackungsmaschine 1 verbessert. Zusätzlich oder alternativ kann das Warnsignal durch ein Blinken der Lichtquelle 40 betont werden. Hier sind verschiedene Ausführungsformen denkbar, die der Bediener der Verpackungsmaschine 1 mittels entsprechender Erläuterungen im Betriebshandbuch der Verpackungsmaschine 1 auswerten kann.

Weitere Vorteile bietet die Busknotenanordnung 24 der vorliegenden Erfindung dadurch, dass sie eine wasserdichte und ggf. vakuum- bzw. druckdichte Kabeldurchführung zum Innenraum 28 der jeweiligen Arbeitsstationen 2, 3, 4, 5 ermöglicht. Außerdem kann die Busknotenanordnung 24 bedingt durch die lösbare Befestigung an der Wand 27 leicht gewartet und/oder ersetzt werden.

Ausgehend von den dargestellten Ausführungsbeispielen sind diverse Änderungen denkbar, ohne vom Schutzumfang der Erfindung abzuweichen. Die beschriebenen Komponenten und Elemente der Busknotenanordnung 24 können in beliebiger Weise miteinander kombiniert werden.

## Patentansprüche

1. Verpackungsmaschine (1) mit einer Arbeitsstation (2, 2a, 3, 4, 5), die einen von einer Wand (27) umgebenen Innenraum (28) aufweist, in welchem ein Werkzeug (29) mit wenigstens einem Heizelement (30) und/oder wenigstens einem Aktor (30) angeordnet ist, wobei eine Busknotenanordnung (24) dazu konfiguriert ist, über eine Schnittstelle (38) eine Information über das Werkzeug (29) bereitzustellen und/oder Steuerungsdaten für das Werkzeug (29) zu empfangen, **dadurch gekennzeichnet, dass** die Busknotenanordnung (24) auf die vom Innenraum (28) abgewandte Außenseite (31) der Wand (27) aufgesetzt ist und Folgendes umfasst:
- eine Gehäusekappe (32),
- wenigstens eine mit Elektronikbauteilen (36) bestückte Platine (35), und
- die mit der wenigstens einen Platine (35) verbundene Schnittstelle (38) zum Verbinden mit einem Kommunikationsbus (23),
wobei eine Ringdichtung (33) vorgesehen ist, die die Gehäusekappe (32) ringförmig umlaufend gegen die Außenseite (31) der Wand (27) abdichtet.

2. Verpackungsmaschine nach Anspruch 1, **dadurch gekennzeichnet, dass** die Busknotenanordnung (24) einen Träger (34) für die Platine (35) aufweist, wobei vorzugsweise der Träger (34) eine der Platine (35) zugewandte Seite (51) des Trägers (34) hermetisch trennt von einer der Platine (35) abgewandten Seite (52) des Trägers (34).

3. Verpackungsmaschine nach Anspruch 2, **dadurch gekennzeichnet, dass** der Träger (34) Aluminium aufweist.

4. Verpackungsmaschine nach einem der Ansprüche 2 oder 3, **dadurch gekennzeichnet, dass** die Busknotenanordnung (24) derart über einer Aussparung (43) in der Wand (27) angeordnet ist, dass die Gehäusekappe (32) die Aussparung (43) vollständig überdeckt.

5. Verpackungsmaschine nach einem der Ansprüche 2 bis 4, **dadurch gekennzeichnet, dass** eine Abdichtung (37) zwischen dem Träger (34) und der Platine (35) vorgesehen ist, vorzugsweise eine Silikonmatte (37).

6. Verpackungsmaschine nach einem der vorangehenden Ansprüche, **dadurch gekennzeichnet, dass** die Gehäusekappe (32) lösbar an der Wand (27) befestigbar ist, vorzugsweise mittels Gewindebolzen (44).

7. Verpackungsmaschine nach einem der vorangehenden Ansprüche, **dadurch gekennzeichnet, dass** die Ringdichtung (33) transparent oder transluzent ist.

8. Verpackungsmaschine nach einem der einem der vorangehenden Ansprüche, **dadurch gekennzeichnet, dass** die Busknotenanordnung (24) wenigstens eine Lichtquelle (40) aufweist.

9. Verpackungsmaschine nach den Ansprüchen 7 und 8, **dadurch gekennzeichnet, dass** die wenigstens eine Lichtquelle (40) innerhalb der Gehäusekappe (32) oder an einer der Ringdichtung (33) zugewandten Kante (41) der Gehäusekappe (32) angeordnet ist.

10. Verpackungsmaschine nach einem der Ansprüche 8 oder 9, **dadurch gekennzeichnet, dass** die Lichtquelle (40) ansteuerbar ist zum Erzeugen unterschiedlicher Farben, unterschiedlicher Beleuchtungsstärken und/oder unterschiedlicher zeitlicher oder räumlicher Leuchtmuster.

11. Verpackungsmaschine nach einem der vorangehenden Ansprüche, **dadurch gekennzeichnet, dass** die über die Schnittstelle (38) bereitgestellte Information über das Werkzeug (29) eine Kennung des Werkzeugs (29) umfasst.

12. Verpackungsmaschine nach einem der vorangehenden Ansprüche, **dadurch gekennzeichnet, dass** die Schnittstelle (38) eine bidirektionale Schnittstelle (38) ist und/oder dass die Kommunikation über die Schnittstelle (38) verschlüsselt ist.

13. Verpackungsmaschine nach einem der vorangehenden Ansprüche, **dadurch gekennzeichnet, dass** an der Platine (35) ein oder mehrere Steuerelemente (36a) zur Ansteuerung des wenigstens einen Heizelements oder Aktors (30) vorgesehen sind.

14. Verpackungsmaschine nach einem der vorangehenden Ansprüche, **dadurch gekennzeichnet, dass** Elektronikbauteile (36b) an der Platine (35) konfiguriert sind zum Empfangen und/oder Auswerten von Signalen von einem oder mehreren in der Arbeitsstation (3) vorgesehenen Sensoren (42).

15. Verpackungsmaschine nach einem der vorangehenden Ansprüche, **dadurch gekennzeichnet, dass** an die Busknotenanordnung (24) ein Hybridkabel (47) anschließbar ist.

## Claims

1. A packaging machine (1) comprising a work station (2, 2a, 3, 4, 5) having an interior (28), which is surrounded by a wall (27) and which has arranged therein a tool (29) with at least one heating element (30) and/or at least one actor (30), wherein a bus node assembly (24) is configured to provide via an interface (38) information on the tool (29) and/or to receive via the interface (38) control data for the tool (29), **characterized in that** the bus node assembly (24) is arranged on the outside (31) of the wall (27) which faces away from the interior (28), and the bus node assembly (24) comprises the following:
- a housing cap (32),
- at least one circuit board (35) populated with electronic components (36), and
- the interface (38) connected to the at least one circuit board (35) and used for connection to a communication bus (23)
wherein an annular seal (33) is provided, which extends annularly around the housing cap (32) thus sealing the latter against the outside (31) of the wall (27).

2. The packaging machine according to claim 1, **characterized in that** the bus node assembly (24) comprises a carrier (34) for the circuit board (35), wherein preferably the carrier (34) hermetically separates a side (51) of the carrier (34) facing the circuit board (35) from a side (52) of the carrier (34) facing away from the circuit board (35).

3. The packaging machine according to claim 2, **characterized in that** the carrier (34) comprises aluminum.

4. The packaging machine according to one of the claims 2 or 3, **characterized in that** the bus node assembly (24) is arranged on top of an opening (43) in the wall (27) such that the housing cap (32) fully covers the opening (43).

5. The packaging machine according to one of the claims 2 to 4, **characterized in that** a seal (37), preferably a silicone mat (37), is provided between the carrier (34) and the circuit board (35).

6. The packaging machine according to one of the preceding claims, **characterized in that** the housing cap (32) is releasably fastenable to the wall (27), preferably by means of threaded bolts (44).

7. The packaging machine according to one of the preceding claims, **characterized in that** the annular seal (33) is transparent or translucent.

8. The packaging machine according to one of the preceding claims, **characterized in that** the bus node assembly (24) comprises at least one light source (40).

9. The packaging machine according to claims 7 and 8, **characterized in that** the at least one light source (40) is arranged inside the housing cap (32) or on an edge (41) of the housing cap (32) facing the annular seal (33).

10. The packaging machine according to one of the claims 8 or 9, **characterized in that** the light source (40) is controllable for generating different colors, different illumination intensities and/or different temporal or spatial light patterns.

11. The packaging machine according to one of the preceding claims, **characterized in that** the information on the tool (29) comprises an identification of the tool (29), the information being provided via the interface (38).

12. The packaging machine according to one of the preceding claims, **characterized in that** the interface (38) is a bidirectional interface (38) and/or communication via the interface (38) is encrypted.

13. The packaging machine according to one of the preceding claims, **characterized in that** the circuit board (35) has provided thereon one or a plurality of control elements (36a) for controlling the at least one heating element or actor (30).

14. The packaging machine according to one of the preceding claims, **characterized in that** the circuit board (35) has configured thereon electronic components (36b) for receiving and/or evaluating signals from one or from a plurality of sensors (42) provided in the work station (3).

15. The packaging machine according to one of the preceding claims, **characterized in that** the bus node assembly (24) is adapted to have a hybrid cable (47) connected thereto.

## Revendications

1. Machine d'emballage (1) avec un poste de travail (2, 2a, 3, 4, 5), qui présente un espace intérieur (28) entouré d'une paroi (27), dans lequel est disposé un outil (29) avec au moins un élément chauffant (30) et/ou au moins un actionneur (30), un dispositif de noeud de bus (24) étant configuré à cet effet, pour fournir des informations sur l'outil (29) via une interface (38) et/ou pour recevoir des données de commande pour l'outil (29), **caractérisé en ce que** le dispositif de noeud de bus (24) est placé sur le côté extérieur (31) de la paroi (27) opposé à l'intérieur (28) et comprend ce qui suit:
- un plafond de logement (32),
- au moins une carte (35) équipée de composants électroniques (36), et
- l'interface (38) connectée à au moins une carte de circuit imprimé (35) pour la connexion à un bus de communication (23).
et **en ce qu'**il est prévu un joint annulaire (33) qui rend étanche le couvercle du boîtier (32) de manière circonférentielle et annulaire contre la face extérieure (31) de la paroi (27).

2. Machine d'emballage selon la revendication 1, **caractérisée en ce que** le dispositif de noeud de bus (24) comporte un support (34) pour la carte (35), de préférence le support (34) séparant hermétiquement un côté (51) du support (34) tourné vers la carte (35) d'un côté (52) du support (34) opposé à la carte (35).

3. Machine d'emballage selon la revendication 2, **caractérisée en ce que** le support (34) comprend de l'aluminium.

4. Machine d'emballage selon l'une des revendications 2 ou 3, **caractérisée en ce que** le dispositif de noeud de bus (24) est disposé au-dessus d'un évidement (43) dans la paroi (27) de telle sorte que le couvercle de boîtier (32) recouvre complètement l'évidement (43).

5. Machine d'emballage selon l'une des revendications 2 à 4, **caractérisée en ce qu'**un joint (37) est prévu entre le support (34) et la carte (35), de préférence un tapis en silicone (37).

6. Machine d'emballage selon l'une des revendications précédentes, **caractérisée en ce que** le couvercle du boîtier (32) peut être fixé de manière amovible à la paroi (27), de préférence au moyen de boulons filetés (44).

7. Machine d'emballage selon l'une des revendications précédentes, **caractérisée en ce que** le joint annulaire (33) est transparent ou translucide.

8. Machine d'emballage selon l'une des revendications précédentes, **caractérisée en ce que** le dispositif de noeud de bus (24) comprend au moins une source de lumière (40).

9. Machine d'emballage selon les revendications 7 et 8, **caractérisée en ce qu'**au moins une source de lumière (40) est disposée à l'intérieur du couvercle du boîtier (32) ou sur un bord (41) du couvercle du boîtier (32) tourné vers le joint annulaire (33).

10. Machine d'emballage selon l'une des revendications 8 ou 9, **caractérisée en ce que** la source lumineuse (40) est contrôlable pour générer différentes couleurs, différents éclairages et/ou différents motifs lumineux temporels ou spatiaux.

11. Machine d'emballage selon l'une des revendications précédentes, **caractérisée en ce que** les informations sur l'outil (29) fournies par le biais de l'interface (38) comprennent une identification de l'outil (29).

12. Machine d'emballage selon l'une des revendications précédentes, **caractérisée en ce que** l'interface (38) est une interface bidirectionnelle (38) et/ou que la communication via l'interface (38) est cryptée.

13. Machine d'emballage selon l'une des revendications précédentes, **caractérisée en ce qu'un** ou plusieurs éléments de commande (36a) pour commander ledit au moins un élément chauffant ou actionneur (30) sont prévus sur la carte de circuit imprimé (35).

14. Machine d'emballage selon l'une des revendications précédentes, **caractérisée en ce que** des composants électroniques (36b) sont configurés sur la carte (35) pour recevoir et/ou évaluer des signaux provenant d'un ou plusieurs capteurs (42) prévus dans le poste de travail (3).

15. Machine d'emballage selon l'une des revendications précédentes, **caractérisée en ce qu'**un câble hybride (47) peut être connecté au dispositif de noeud de bus (24).
